# EUROPÄISCHE PATENTSCHRIFT

(11) **EP 1 974 222 B1**
(45) Veröffentlichungstag und Bekanntmachung des Hinweises auf die Patenterteilung: **24.02.2010**
(21) Anmeldenummer: 07847957.3
(22) Anmeldetag: 07.12.2007
(51) Int. Cl.: G01P 1/02, G01D 11/24, F16B 41/00

(54) **IMPULSGEBER MIT EINER PLOMBIERVORRICHTUNG**
PULSE GENERATOR WITH A SEALING DEVICE
GÉNÉRATEUR D'IMPULSIONS AVEC UN DISPOSITIF DE PLOMBAGE

(30) Priorität: 27.12.2006 DE 102006061644
(43) Veröffentlichungstag der Anmeldung: 01.10.2008
(73) Patentinhaber: Continental Automotive GmbH, 30165 Hannover (DE)
(72) Erfinder: BUSSE, Andrea, 78089 Unterkirnach (DE); PLANKENHORN, Horst, 78048 Villingen-Schwenningen (DE)
(86) Internationale Anmeldenummer: PCT/EP2007/063491
(87) Internationale Veröffentlichungsnummer: WO 2008/080761

(56) Entgegenhaltungen:
- DE-U1- 29 721 694
- DE-U1- 29 911 835

## Beschreibung

Die Erfindung bezieht sich auf einen Impulsgeber mit einer Plombiervorrichtung, wobei der zylinderartig ausgebildete Impulsgeber an seinem einen Ende ein Gewinde zum Einschrauben in eine Gewindebohrung eines Wandelements bis zur Anlage mit einer Flanschfläche an dem Wandelement aufweist, an seinem anderen Ende einen Steckanschluss zur elektrischen Kontaktierung eines in dem Impulsgeber angeordneten Sensorelements besitzt sowie in seinem mittleren Bereich erste Schlüsselflächen aufweist, mit einer den Impulsgeber im Bereich der Schlüsselflächen umschließenden hülsenartigen Plombierhaube, die bei in die Gewindebohrung des Wandelements eingeschraubtem Impulsgeber in ihrer den Bereich der Schlüsselflächen umschließenden Lage gesichert ist.

Bei einem derartigen Impulsgeber ist es bekannt, den Impulsgeber in die Gewindebohrung des Wandelements einzuschrauben und dann die Plombierhaube auf den Impulsgeber aufzuschieben, wobei sie in ihrer Einbaulage dann durch Rastelemente mit dem Impulsgeber verrastet.

Eine solche Ausbildung erfordert einen großen Montageaufwand, da nach der Montage des Impulsgebers noch die Plombierhaube montiert werden muss.

Das Dokument DE 299 11 835 U1 offenbart einen Impulsgeber gemäß dem Stand der Technik, welcher mittels einer Kunststoffhülse gegen unbefugtes herausdrehen gesichert ist. Bei dieser herkömmlichen Vorrichtung muss zunächst in einem ersten Arbeitsschritt der Impulsgeber in die Gewindebohrung des Wandelements (z.B. eines Getriebegehäuses) eingeschraubt werden, wonach in einem zweiten Arbeitsschritt die Plombierhaube auf den Impulsgeber aufgeschoben und mit ihm verrastet werden kann. Die Schrift DE 297 21 694 U1 zeigt ebenfalls mehrteilige Vorrichtungen, die in mehrstufiger Montage in den manipulationsgesicherten Endzustand gebracht werden müssen.

Aufgabe der Erfindung ist es daher einen Impulsgeber der eingangs genannten Art zu schaffen, der einfach aufgebaut ist und einen geringen Montageaufwand erfordert.

Diese Aufgabe wird erfindungsgemäß dadurch gelöst, dass die Plombierhaube an ihrer Außenseite zweite Schlüsselflächen aufweist und über eine Sollbruchstelle oder über eine Kupplung mit dem Impulsgeber verbunden ist, wobei die Kupplung in Einschraubdrehrichtung des Impulsgebers in die Gewindebohrung geschlossen und in Ausschraubdrehrichtung geöffnet ist.

Durch diese Ausbildung kann der Impulsgeber mit der Plombierhaube bereits als Baugruppe vormontiert sein, um dann in das Wandelement eingeschraubt zu werden.

Dazu wird ein Werkzeug benutzt, das an den zweiten Schlüsselflächen angreift. Durch das Werkzeug wird die Plombierhaube in Einschraubdrehrichtung gedreht. Da die Plombierhaube über die Sollbruchstelle oder die Kupplung mit dem Impulsgeber verbunden ist, wird dabei der Impulsgeber mit seinem Gewinde in die Gewindebohrung des Wandelements eingeschraubt. Die Sollbruchstelle ist dabei so dimensioniert, dass das dazu notwendige Drehmoment sicher aufgebracht werden kann.

Wenn der Impulsgeber mit seiner Flanschfläche zur Anlage an dem Wandelement kommt, überschreitet das Drehmoment die von der Sollbruchstelle übertragbare Kraft, so dass die Verbindung durch die Sollbruchstelle-bricht.

Durch Drehen der Plombierhaube in Ausschraubrichtung kann nun kein Lösen des Impulsgebers aus der Gewindebohrung mehr erfolgen, da Plombierhaube und Impulsgeber nicht mehr drehfest miteinander verbunden sind.

Dies ist auch bei der Verdrehung der Kupplung der Fall, da diese nur in Einschraubdrehrichtung, nicht aber in Ausschraubdrehrichtung ein Drehmoment von der Plombierhaube auf den Impulsgeber überträgt.

Soll der Impulsgeber wieder ausgebaut werden, so ist dies nur dadurch möglich, dass die Plombierhaube durch Zerstören entfernt wird. Damit wird die erste Schlüsselfläche des Impulsgebers freigelegt und kann zum Verdrehen des Impulsgebers in Ausschraubrichtung benutzt werden.

Ein unbefugtes Entfernen oder Manipulieren des Impulsgebers wird somit durch die Plombierhaube verhindert bzw. ist an einer Beschädigung der Plombierhaube erkennbar.

Derartige Impulsgeber werden zur Messwerterfassung in Fahrzeugen eingesetzt und beispielsweise derart am Gehäuse eines Fahrzeuggetriebes befestigt, dass der Messkopf des Impulsgebers, mit dem er durch die Wand des Getriebegehäuses ragt, einem Zahnrad des Getriebes bzw. einer speziellen Taktscheibe unmittelbar zugeordnet ist.

Wegen des dokumentarischen Charakters der erfassten und übertragenen Messwerte müssen Manipulationen erschwert oder verhindert werden, was durch die Plombierhaube erfolgt.

Zur einfachen Ausbildung der Sollbruchstelle kann die Plombierhaube eine oder mehrere Rastnasen aufweisen, die in einem radialen Abstand zur Längsachse des Gewindes des Impulsgebers in entsprechende Ausnehmungen des Impulsgebers ragen und bei Überschreitung einer bestimmten Querkraft abreißbar sind.

Zur einfachen axialen Steckmontage beim Zusammenbau von Impulsgeber und Plombierhaube zu einer Baueinheit können die Ausnehmungen axial in eine Richtung offen sein, wobei durch diese Öffnung axial eine Rastnase der Plombierhaube einführbar ist.

Es versteht sich, dass entsprechend auch die Rastnasen am Impulsgeber und die Ausnehmungen an der Plombierhaube angeordnet sein können.

Die Kupplung kann ein zwischen Plombierhaube und Impulsgeber angeordnetes Klemmrichtgesperre sein, durch das in Einschraubdrehrichtung der Plombierhaube die Plombierhaube mit dem Impulsgeber gekuppelt und in Ausschraubdrehrichtung der Plombierhaube die Plombierhaube von dem Impulsgeber entkuppelt ist.

Eine andere Ausbildung besteht darin, dass die Kupplung eine zwischen Plombierhaube und Impulsgeber angeordnete Ratsche ist, durch die in Einschraubdrehrichtung der Plombierhaube die Plombierhaube mit dem Impulsgeber gekuppelt und in Ausschraubdrehrichtung der Plombierhaube die Plombierhaube von dem Impulsgeber entkuppelt ist.

Vorzugsweise ist das Sensorelement ein Hallelement.

Weist der Impulsgeber eine Sensorhülse auf, die mit den ersten Schlüsselflächen und dem Gewinde versehen ist und in deren koaxiale Durchgangsöffnung ein Sensorgehäuse frei drehbar und axial gesichert eingesetzt ist, wobei das Sensorgehäuse das Sensorelement, die Flanschfläche und den Steckanschluss aufweist, so führt auch ein Verdrehen des Impulsgebers an dem aus der Plombierhaube herausragenden Steckanschluss nicht zu einem Lösen des Impulsgebers von dem Wandelement, da das Sensorgehäuse frei in der durch die Plombierhaube geschützten Sensorhülse drehbar ist.

Vorzugsweise ist dabei die Sensorhülse vollständig von der Plombierhaube umschlossen.

Das Sensorgehäuse kann dabei mittels einem oder mehreren Sicherungselementen in der Durchgangsöffnung der Sensorhülse axial gesichert sein.

Mit einfachen Mitteln ist dies dadurch erreichbar, dass das oder die Sicherungselemente Sicherungsringe sind, die in einer an der Mantelfläche des Sensorgehäuses radial umlaufend ausgebildeten Ringnut eingesetzt sind und in eine an der Innenwand der Durchgangsöffnung radial umlaufend ausgebildete zweite Ringnut ragen.

Zur axialen Sicherung in die eine Axialrichtung kann die Durchgangsöffnung eine Stufenbohrung sein, an deren Übergang von der großen zur kleinen Stufe das entsprechend stufig ausgebildete Sensorgehäuse mit einer Schulter axial abgestützt ist.

Ein zerstörungsfreies axiales Entfernen der Plombierhaube wird auf einfache Weise dadurch verhindert, dass das Sensorgehäuse ein radial hervorstehendes Element, insbesondere einen Flansch aufweist, der an dem dem Steckanschluss zugewandten stirnseitigen Ende der Plombierhaube axial in Anlage ist.

Zur sicheren Befestigung eines mit einem Anschlusskabel versehenen Steckers an dem Steckanschluss kann der Impulsgeber an seinem den Steckanschluss aufweisenden Ende mit einer Renkanschlussstruktur ausgebildet sein, auf die eine Überwurfmutter eines mit dem Steckanschluss verbindbaren Steckers aufschraubbar ist.

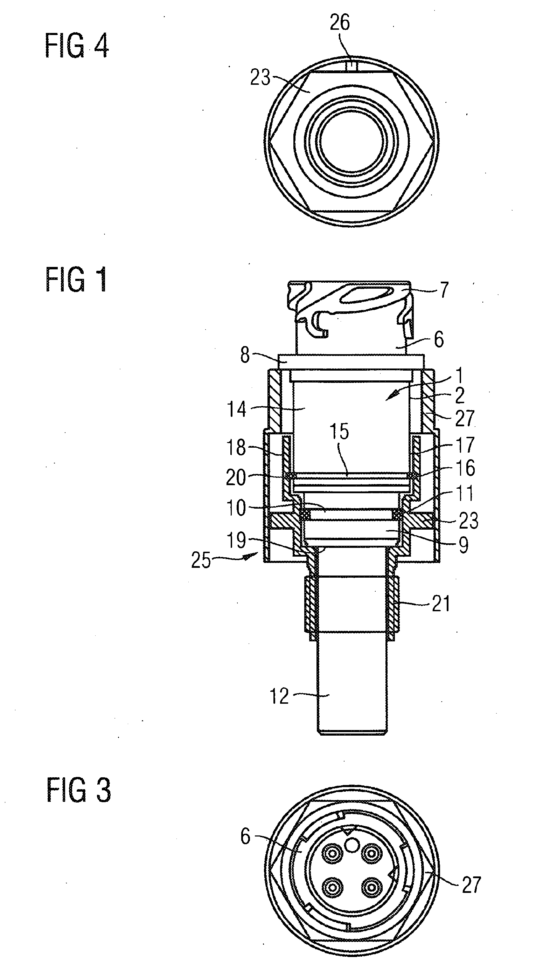

Ein Ausführungsbeispiel der Erfindung ist in der Zeichnung dargestellt und wird im folgenden näher beschrieben. Es zeigen
- Figur 1: eine Vorderansicht eines Impulsgeber mit Plombiervorrichtung im Schnitt

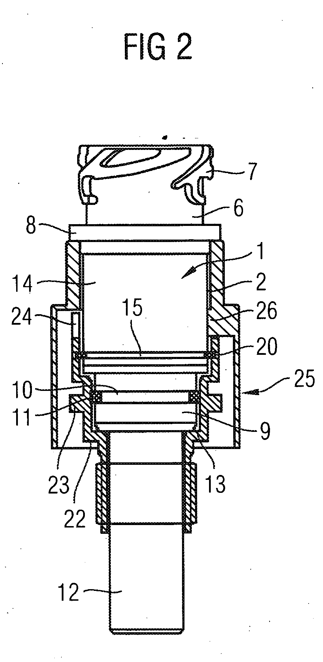

- Figur 2: eine Seitenansicht des Impulsgebers mit Plombiervorrichtung nach Figur 1 im Schnitt
- Figur 3: eine Draufsicht des Impulsgebers mit Plombiervorrichtung nach Figur 1
- Figur 4: eine Untenansicht des Impulsgebers mit Plombiervorrichtung nach Figur 1

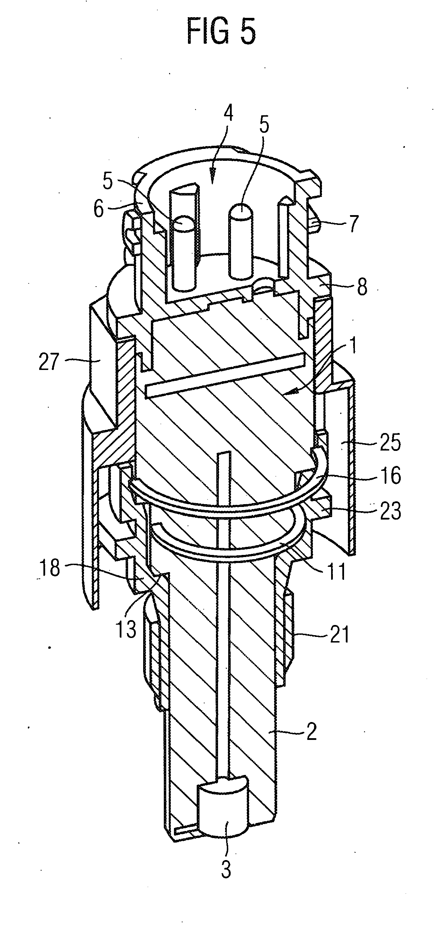

- Figur 5: eine perspektivische Schnittansicht des Impulsgebers mit Plombiervorrichtung nach Figur 1

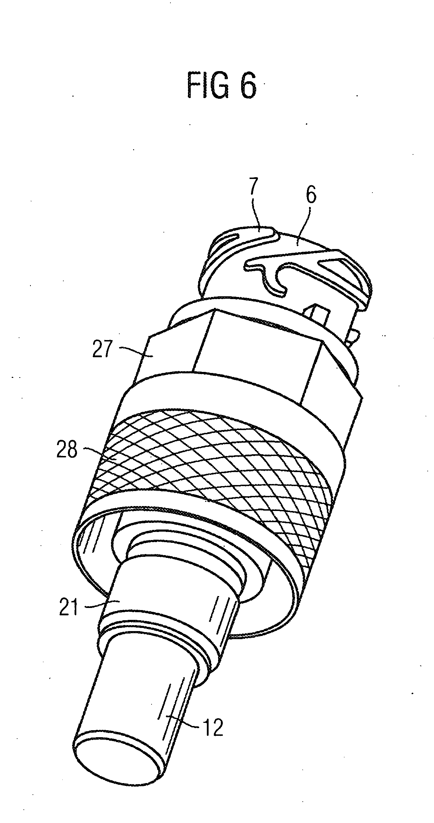

- Figur 6: eine perspektivische Ansicht des Impulsgebers mit Plombiervorrichtung nach Figur 1.

Der in den Figuren dargestellte Impulsgeber 1 besteht aus einem rotationssymmetrischen, geschlossenen Sensorgehäuse 2, in dessen einem Endbereich ein Sensorelement 3 wie z.B. ein Hallelement angeordnet ist.

Von dem Sensorelement 3 führen im Inneren des Sensorgehäuses 2 nicht dargestellte Leitungen zu dem entgegengesetzten zweiten Endbereich des Sensorgehäuses 2, der als Steckanschluss 4 mit zwei axial herausragenden Kontaktstiften 5 ausgebildet ist, zu denen die Leitungen führen.

Die aus dem Sensorgehäuse 2 herausragenden Kontaktstifte 5 sind mit Abstand von einem Hülsenteil 6 des Sensorgehäuses 2 umschlossen, an dessen äußerer Mantelfläche eine Renkstruktur 7 zum Aufschrauben einer nicht dargestellten Überwurfmutter eines mit dem Steckanschluss verbindbaren Steckers ausgebildet ist.

An dem zweiten Endbereich besitzt das Sensorgehäuse 2 einen radial hervorstehenden umlaufenden Flansch 8.

Das Sensorgehäuse 1 ist derart stufig ausgebildet, dass es von seinem größten Außendurchmesser an seinem zweiten Endbereich in zwei zylindrischen Stufen sich in seinem Außendurchmesser zum ersten Endbereich hin reduziert.

Die mittlere Stufe ist an ihrer zylindrischen Mantelfläche mit einer radial umlaufenden Nut 10 ausgebildet, in der ein aus der Nut 10 herausragender elastischer Dichtring 11 angeordnet ist.

Der radiale Übergang von der mittleren Stufe 9 zur Stufe 12 geringsten Durchmessers bildet eine ringförmige Schulter 13.

An der zylindrischen Mantelfläche der Stufe 14 größten Durchmessers des Sensorgehäuses 2 ist eine radial umlaufende Ringnut 15 ausgebildet, in die ein radial federnder Sicherungsring 16 eingesetzt ist.

Das Sensorgehäuse 2 ist axial in eine Durchgangsöffnung 17 einer Sensorhülse 18 des Impulsgebers 1 frei um seine Längsachse drehbar eingesetzt, wobei die Durchgangsöffnung entsprechend der Außenkontur des Sensorgehäuses 2 als Stufenbohrung 17 ausgebildet ist.

Dabei ist die Schulter 13 des Sensorgehäuses 2 an dem radialen Übergang von der mittleren Stufe zur kleinen Stufe der Stufenbohrung 17 axial abgestützt.

In dieser Einbaulage liegt der Ringnut 15 eine an der Innenwand der mittleren Stufe der Stufenbohrung 17 radial umlaufend ausgebildete zweite Ringnut 20 radial gegenüber, so dass der Sicherungsring 16 radial in die zweite Ringnut 20 hineinragt und das Sensorgehäuse 2 axial in der Sensorhülse 18 sichert.

Mit seinem ersten Endbereich und mit seinem zweiten Endbereich ragt das Sensorgehäuse 2 aus der Sensorhülse 18 heraus.

An der radial umlaufenden äußeren Mantelfläche der kleinen Stufe der Sensorhülse 18 ist ein Gewinde 21 ausgebildet, mit der Impulsgeber 1 in eine Gewindebohrung eines nicht dargestellten Wandelements einschraubbar ist, bis die Sensorhülse 18 mit einer an dem Übergang von kleinen Stufe zur mittleren Stufe gebildeten radialen Flanschfläche 22 an dem Wandelement in Anlage ist.

Im Bereich der mittleren Stufe besitzt die Sensorhülse 18 an ihrer Außenseite als Sechskant ausgebildete erste Schlüsselflächen 23.

An dem freien Endbereich der großen Stufe der Sensorhülse 18 ist in der Hülsenwand eine radial durchgehende Ausnehmung 24 ausgebildet, die an dem freien Ende der großen Stufe axial nach außen mündet.

Bis auf den Bereich des Gewindes 21 und des Hülsenteils 6 ist der Impulsgeber 1 von einer hülsenartigen Plombierhaube 25 umschlossen, die aus einem Kunststoff oder einem anderen leicht zerstörbaren Werkstoff bestehen kann.

Durch die an der Innenkontur der Plombierhaube 25 anliegenden ersten Schlüsselflächen 23 wird die Plombierhaube 25 koaxial zum Impulsgeber 1 geführt.

Eine im Inneren der Plombierhaube 25 angeordnete, sich axial erstreckende Rastnase 26 der Plombierhaube 25 ragt in die Ausnehmung 24 hinein und bildet eine drehfeste Verbindung der Plombierhaube 25 mit der Sensorhülse 18, über die ein Drehmoment bis zu einer bestimmten Größe übertragbar ist.

Das dem Steckanschluss 4 zugewandte Ende der Plombierhaube 25 ist axial an dem Flansch 8 in Anlage.

An ihrer Außenseite ist die Plombierhaube 25 mit ebenfalls als Sechskant ausgebildeten zweiten Schlüsselflächen 27 ausgebildet.

Zum Einbau des Impulsgebers 1 mit der Plombierhaube 25 werden diese als vormontierbare Baugruppe mit dem Gewinde 21 des Impulsgebers 1 in eine Gewindebohrung eines Wandelements bis zur Anlage der Flanschfläche 22 an dem Wandelement in Einschraubdrehrichtung eingeschraubt.

Dies erfolgt mittels eines an den zweiten Schlüsselflächen 27 angreifenden Werkzeugs.

Dazu ist ein Drehmoment erforderlich, das unter dem von der Rastnase 26 maximal übertragbaren Drehmoment liegt.

Bei Anlage der Flanschfläche 22 kommt es zu einem Anstieg des Drehmoments über das von der Rastnase 26 maximal übertragbare Drehmoment hinaus, wobei die Rastnase 26 von der Plombierhaube 25 abreißt.

Soll nun der Impulsgeber 1 wieder ausgeschraubt werden, so ist dies nicht mehr über ein an der Plombierhaube 25 angreifendes Werkzeug mehr möglich, da die Plombierhaube 25 nun von dem Impulsgeber 1 drehentkoppelt ist.

Ein Ausschrauben des Impulsgebers 1 ist nur noch nach Zerstörung und Entfernung der Blockierhaube 25 mittels eines an den ersten Schlüsselflächen 23 des Impulsgebers 1 angreifenden Werkzeugs möglich. Dabei wird aber auch eine Sicherheitsbanderole 28 zerstört, die die zylindrische Mantelfläche der Plombierhaube umschließt.

## Patentansprüche

1. Impulsgeber mit einer Plombiervorrichtung, wobei der zylinderartig ausgebildete Impulsgeber an seinem einen Ende ein Gewinde zum Einschrauben in eine Gewindebohrung eines Wandelements bis zur Anlage mit einer Flanschfläche an dem Wandelement aufweist, an seinem anderen Ende einen Steckanschluss zur elektrischen Kontaktierung eines in dem Impulsgeber angeordneten Sensorelements besitzt sowie in seinem mittleren Bereich erste Schlüsselflächen aufweist, mit einer den Impulsgeber im Bereich der ersten Schlüsselflächen umschließenden hülsenartigen Plombierhaube, die bei in die Gewindebohrung des Wandelements eingeschraubtem Impulsgeber in ihrer den Bereich der ersten Schlüsselflächen umschließenden Lage gesichert ist, **dadurch gekennzeichnet , dass** die Plombierhaube (25) an ihrer Außenseite zweite Schlüsselflächen (27) aufweist und über eine Sollbruchstelle oder über eine Kupplung mit dem Impulsgeber (1) verbunden ist, wobei die Kupplung in Einschraubdrehrichtung des Impulsgebers in die Gewindebohrung geschlossen und in Ausschraubdrehrichtung geöffnet ist.

2. Impulsgeber nach Anspruch 1, **dadurch gekennzeichnet, dass** die Plombierhaube (25) eine oder mehrere Rastnasen (26) aufweist; die in einem radialen Abstand zur Längsachse des Gewindes (21) des Impulsgebers (1) in entsprechende Ausnehmungen (24) des Impulsgebers (1) ragen und bei Überschreitung einer bestimmten Querkraft abreißbar sind.

3. Impulsgeber nach Anspruch 1, **dadurch gekennzeichnet, dass** die Kupplung ein zwischen Plombierhaube und Impulsgeber angeordnetes Klemmrichtgesperre ist, durch das in Einschraubdrehrichtung der Plombierhaube die Plombierhaube mit dem Impulsgeber gekuppelt und in Ausschraubdrehrichtung der Plombierhaube die Plombierhaube von dem Impulsgeber entkuppelt ist.

4. Impulsgeber nach Anspruch 1, **dadurch gekennzeichnet, dass** die Kupplung eine zwischen Plombierhaube und Impulsgeber angeordnete Ratsche ist, durch die in Einschraubdrehrichtung der Plombierhaube die Plombierhaube mit dem Impulsgeber gekuppelt und in Ausschraubdrehrichtung der Plombierhaube die Plombierhaube von dem Impulsgeber entkuppelt ist.

5. Impulsgeber nach einem der vorhergehenden Ansprüche, **dadurch gekennzeichnet , dass** das Sensorelement (3) ein Hallelement ist.

6. Impulsgeber nach einem der vorhergehenden Ansprüche, **dadurch gekennzeichnet , dass** der Impulsgeber (1) eine Sensorhülse (18) aufweist, die mit den ersten Schlüsselflächen (23) und dem Gewinde (21) versehen ist und in deren koaxiale Durchgangsöffnung ein Sensorgehäuse (2) frei drehbar und axial gesichert eingesetzt ist, wobei das Sensorgehäuse (2) das Sensorelement (3), die Flanschfläche (22) und den Steckanschluss (4) aufweist.

7. Impulsgeber nach Anspruch 6, **dadurch gekennzeichnet, dass** die Sensorhülse vollständig von der Plombierhaube, umschlossen ist.

8. Impulsgeber nach einem der Ansprüche 6 und 7, **dadurch gekennzeichnet, dass** das Sensorgehäuse (2) mittels einem oder mehreren Sicherungselementen in der Durchgangsöffnung der Sensorhülse (18) axial gesichert ist.

9. Impulsgeber nach Anspruch 8, **dadurch gekennzeichnet, dass** das oder die Sicherungselemente Sicherungsringe (16) sind, die in einer an der Mantelfläche des Sensorgehäuses (2) radial umlaufend ausgebildete Ringnut (15) eingesetzt sind und in eine an der Innenwand der Durchgangsöffnung radial umlaufend ausgebildete zweite Ringnut (20) ragen.

10. Impulsgeber nach einem der Ansprüche 7 bis 9, **dadurch gekennzeichnet , dass** die Durchgangsöffnung eine Stufenbohrung (17) ist, an deren Übergang von der großen zur kleinen Stufe das entsprechend stufig ausgebildete Sensorgehäuse (2) mit einer Schulter (13) axial abgestützt ist.

11. Impulsgeber nach einem der Ansprüche 7 bis 10, **dadurch gekennzeichnet , dass** das Sensorgehäuse (2) ein radial hervorstehendes Element, insbesondere einen Flansch (8) aufweist, der an dem dem Steckanschluss (4) zugewandten stirnseitigen Ende der Plombierhaube (25) axial in Anlage ist.

12. Impulsgeber nach einem der vorhergehenden Ansprüche, **dadurch gekennzeichnet , dass** der Impulsgeber (1) an seinem den Steckanschluss (4) aufweisenden Ende mit einer Renkanschlussstruktur (7) ausgebildet ist, auf die eine Überwurfmutter eines mit dem Steckanschluss (4) verbindbaren Steckers aufschraubbar ist.

## Claims

1. Pulse generator having a sealing device, wherein the pulse generator in the shape of a cylinder comprises at one of its ends a thread for screwing into a threaded bore in a wall element until it abuts with a flange face against the wall element, at its other end a plug-type connector for making electrical contact with a sensor element which is arranged in the pulse generator, and having in its central region first key faces, having a sleeve-like sealing hood which surrounds the pulse generator in the region of the first key faces and which is secured in its position surrounding the region of the first key faces, when the pulse generator is screwed into the threaded bore in the wall element, **characterized in that** the sealing hood (25) has two key faces (27) on its outer side and is connected to the pulse generator (1) via a predetermined break point or via a coupling, wherein the coupling is closed in the screwing in direction of rotation of the pulse generator into the threaded bore and opened in the unscrewing direction of rotation.

2. Pulse generator according to Claim 1, **characterized in that** the sealing hood (25) has one or more latching projections (26) which project into corresponding recesses (24) in the pulse generator (1) at a radial distance from the longitudinal axis of the thread (21) of the pulse generator (1) and can be torn off when a specific lateral force is exceeded.

3. Pulse generator according to Claim 1, **characterized in that** the coupling is a clamping pawl which is arranged between the sealing hood and pulse generator, by means of which the sealing hood is coupled to the pulse generator in the screwing in direction of rotation of the sealing hood, and the sealing hood is decoupled from the pulse generator in the unscrewing direction of rotation of the sealing hood.

4. Pulse generator according to Claim 1, **characterized in that** the coupling is a ratchet which is arranged between the sealing hood and the pulse generator, and by means of which the sealing hood is coupled to the pulse generator in the screwing in direction of rotation of the sealing hood, and the sealing hood is decoupled from the pulse generator in the unscrewing direction of rotation of the sealing hood.

5. Pulse generator according to one of the preceding claims, **characterized in that** the sensor element (3) is a Hall element.

6. Pulse generator according to one of the preceding claims, **characterized in that** the pulse generator (1) has a sensor sleeve (18) which is provided with the first key faces (23) and the thread (21), and into whose coaxial through-opening a sensor housing (2) is inserted in a freely rotatable and axially secured fashion, wherein the sensor housing (2) comprises the sensor element (3), the flange face (22) and the plug-type connector (4).

7. Pulse generator according to Claim 6, **characterized in that** the sensor sleeve is completely surrounded by the sealing hood.

8. Pulse generator according to one of Claims 6 and 7, **characterized in that** the sensor housing (2) is secured axially in the through-opening of the sensor sleeve (18) by means of one or more securing elements.

9. Pulse generator according to Claim 8, **characterized in that** the securing element or elements are securing rings (16) which are inserted into an annular groove (15) which is formed so as to run around radially on the lateral face of the sensor housing (2), and project into a second annular groove (20) which is formed so as to run around radially on the inner wall of the through-opening.

10. Pulse generator according to one of Claims 7 to 9,
**characterized in that** the through-opening is a stepped bore (17) at whose transition from the large step to the small step the sensor housing (2) which is embodied in a correspondingly stepped fashion is supported axially by a shoulder (13).

11. Pulse generator according to one of Claims 7 to 10,
**characterized in that** the sensor housing (2) comprises a radially protruding element, in particular a flange (8), which abuts axially against the front-side end of the sealing hood (25) which faces the plug-type connector (4).

12. Pulse generator according to one of the preceding claims, **characterized in that** the pulse generator (1) is embodied at its end comprising the plug-type connector (4) with a bayonet connection structure (7) onto which a union nut of a plug which can be connected to the plug-type connector (4) can be screwed.

## Revendications

1. Générateur d'impulsions à système de plombage, où le générateur d'impulsions de forme cylindrique comporte, à l'une de ses extrémités, un filetage destiné à être vissé dans un trou fileté d'un élément de paroi jusqu'à ce qu'il s'applique par une face de bride sur l'élément de paroi, a, à son autre extrémité, un raccordement enfichable pour le raccordement électrique d'un organe détecteur logé dans le générateur d'impulsions, et comporte également, dans sa partie centrale, des premières surfaces d'attaque pour clefs de serrage, avec un capot de plombage ressemblant à une douille enveloppant le générateur d'impulsions dans la zone des premières surfaces d'attaque pour clefs de serrage, ledit capot de plombage étant, lorsque le générateur d'impulsions est vissé dans le trou fileté de l'élément de paroi, fixé dans sa position enveloppant la zone des premières surfaces d'attaque pour clefs de serrage, **caractérisé par le fait que** le capot de plombage (25) comporte sur sa face extérieure des deuxièmes surfaces d'attaque (27) pour clefs de serrage et est, par l'intermédiaire d'un point de rupture ou d'un raccord d'accouplement, lié au générateur d'impulsions (1), le raccord d'accouplement étant fermé dans le trou fileté dans le sens de rotation de vissage du générateur d'impulsions et ouvert dans le sens de rotation de dévissage.

2. Générateur d'impulsions selon la revendication 1, **caractérisé par le fait que** le capot de plombage (25) comporte un ou plusieurs ergots d'arrêt (26) faisant saillie dans des évidements correspondants (24) du générateur d'impulsions (1) à une certaine distance dans le sens radial de l'axe longitudinal du filetage (21) du générateur d'impulsions (1) et pouvant se rompre lorsqu'une force transversale déterminée est dépassée.

3. Générateur d'impulsions selon la revendication 1, **caractérisé par le fait que** le raccord d'accouplement est un dispositif d'encliquetage à blocage placé entre le capot de plombage et le générateur d'impulsions, par lequel, dans le sens de rotation de vissage du capot de plombage, le capot de plombage est accouplé avec le générateur d'impulsions et, dans le sens de rotation de dévissage du capot de plombage, le capot de plombage est découplé du générateur d'impulsions.

4. Générateur d'impulsions selon la revendication 1, **caractérisé par le fait que** le raccord d'accouplement est un mécanisme à rochet placé entre le capot de plombage et le générateur d'impulsions, par lequel, dans le sens de rotation de vissage du capot de plombage, le capot de plombage est accouplé avec le générateur d'impulsions et, dans le sens de rotation de dévissage du capot de plombage, le capot de plombage est découplé du générateur d'impulsions.

5. Générateur d'impulsions selon l'une des revendications précédentes, **caractérisé par le fait que** l'organe détecteur (3) est un élément à effet Hall.

6. Générateur d'impulsions selon l'une des revendications précédentes, **caractérisé par le fait que** le générateur d'impulsions (1) comporte une douille de détecteur (18), qui est dotée des premières surfaces d'attaque pour clefs de serrage (23) et du filetage (21) et dans l'ouverture traversante coaxiale de laquelle est inséré un boîtier de détecteur (2) qui y tourne librement et y est fixé dans le sens axial, le boîtier de détecteur (2) comportant l'organe détecteur (3), la face de bride (22) et le raccordement enfichable (4).

7. Générateur d'impulsions selon la revendication 6, **caractérisé par le fait que** la douille de détecteur est complètement entourée par le capot de plombage.

8. Générateur d'impulsions selon l'une des revendications 6 et 7, **caractérisé par le fait que** le boîtier de détecteur (2) est fixé dans le sens axial au moyen d'un ou plusieurs organes de fixation dans l'ouverture traversante de la douille de détecteur (18).

9. Générateur d'impulsions selon la revendication 8, **caractérisé par le fait que** le ou les organes de fixation sont des bagues de fixation (16) qui sont insérées dans une rainure circulaire (15) ménagée dans le sens radial dans une surface enveloppante du boîtier de détecteur (2) .

10. Générateur d'impulsions selon l'une des revendications 7 à 9, **caractérisé par le fait que** l'ouverture traversante est un alésage à gradins (17) dans lequel le boîtier de détecteur (2), qui est conçu en gradins d'une façon correspondante, s'appuie par un épaulement (13) sur le gradin séparant la partie la plus grande et la partie la plus petite.

11. Générateur d'impulsions selon l'une des revendications 7 à 10, **caractérisé par le fait que** le boîtier de détecteur (2) comporte un organe, notamment une bride (8) faisant saillie dans le sens radial et qui s'applique, dans le sens axial, sur l'extrémité frontale du capot de plombage (25) tournée vers le raccordement enfichable (4).

12. Générateur d'impulsions selon l'une des revendications précédentes, **caractérisé par le fait que** le générateur d'impulsions (1) est équipé, à son extrémité comportant le raccordement enfichable (4), d'une structure de raccordement à baïonnette (7) sur laquelle un écrou d'accouplement peut être vissé sur le connecteur relié au raccordement enfichable (4).
